(19) Europäisches Patentamt / European Patent Office / Office européen des brevets

(11) **EP 3 813 361 A1**

(12) **EUROPEAN PATENT APPLICATION**
published in accordance with Art. 153(4) EPC

(43) Date of publication:
**28.04.2021 Bulletin 2021/17**

(21) Application number: **19807483.3**

(22) Date of filing: **18.02.2019**

(51) Int Cl.:
*H04N 7/15* (2006.01)          *H04N 7/14* (2006.01)
*G06T 7/70* (2017.01)

(86) International application number:
**PCT/KR2019/001905**

(87) International publication number:
**WO 2019/225836 (28.11.2019 Gazette 2019/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.05.2018 KR 20180058605**

(71) Applicant: **Uprism Co., Ltd.
Seoul 06123 (KR)**

(72) Inventor: **CHA, Min Soo
Seoul 05510 (KR)**

(74) Representative: **Habermann, Hruschka &
Schnabel
Patentanwälte
Montgelasstraße 2
81679 München (DE)**

(54) **VIDEO CONFERENCE SERVER CAPABLE OF PROVIDING VIDEO CONFERENCE BY USING PLURALITY OF VIDEO CONFERENCE TERMINALS, AND CAMERA TRACKING METHOD THEREFOR**

(57) Disclosed are a videoconferencing server capable of providing multiscreen videoconferencing by using multiple videoconferencing terminals, and a camera tracking method therefor. The videoconferencing server of the present invention can be implemented in such a manner that multiple conventional videoconferencing terminals (physical terminals) having one or two displays are logically grouped to operate as a "logical terminal" which operates as one videoconferencing point. Through distribution of videos provided to the multiple physical terminals constituting the logical terminal, the videoconferencing server can perform processing as if the logical terminal supports a multiscreen. The videoconferencing server provides a function of recognizing and tracking a target in the middle of speaking in the logical terminal.

FIG. 6

```
Creating session
to each videoconferencing point          S307
                                         S309

Receiving source video/audio             S311
from each videoconferencing point

Recognizing target location              S601

Selecting tracking camera and
controlling tracking camera with         S603
preset camera positions to
capture target location
```

## Description

CROSS-REFERENCE TO RELATED APPLICATIONS

This application is a national stage of International Application No. PCT/KR2019/001905, filed February 18, 2019, claims the benefit of priority to Korean Application No. 10-2018-0058605, filed May 23, 2018, in the Korean Intellectual Priority Office, the disclosures of which are incorporated herein by reference.

Technical Field

The present invention relates to a multipoint videoconferencing system. More particularly, the present invention relates to a videoconferencing server and a camera tracking method therefor, the videoconferencing server being capable of providing multiscreen videoconferencing in which multiple videos for multipoint videoconferencing are displayed using multiple videoconferencing terminals without conventional telepresence equipment.

Background Art

In general, videoconferencing systems are divided into standards-based videoconferencing terminals (or systems) using standard protocols such as H.323 or the Session Initiation Protocol (SIP), and non-standard videoconferencing terminals using their own protocols.

Major videoconferencing equipment companies such as Cisco Systems, Inc., Polycom, Inc., Avaya, Inc., Lifesize, Inc., and the like provide videoconferencing solutions using the above-described standard protocols. However, many companies offer non-standard videoconferencing systems because it is difficult to implement various functions when making products using only the standard technology.

<MCU for multi-videoconferencing based on standard terminal>

In the videoconferencing system, there are 1:1 videoconferencing where two videoconferencing terminals (two points) are connected, and multi-videoconferencing where multiple videoconferencing terminals (multiple points) are simultaneously connected. In general, all videoconferencing terminals participating in videoconferencing are individual videoconferencing points, and for each point, at least one conference participant attends.

The standard videoconferencing terminal connects a counterpart with one session and commonly processes only one video and voice so the standard videoconferencing terminal is fundamentally applied to 1:1 videoconferencing. In addition, the standard terminal may process one auxiliary video for document conferencing by using H.239 and Binary Floor Control Protocol (BFCP). Therefore, in the standard videoconferencing system, for the multi-videoconferencing (not 1:1 videoconferencing) where three or more points are connected, a device called a Multipoint Conferencing Unit (MCU) is required. The MCU mixes videos provided from three or more points to generate one video for each of the points and provides the result to the standard terminal, thereby solving the limit of the standard protocol.

All the videoconferencing terminals involved in the videoconferencing compress videos and voice data created by themselves for transmission to the counterparts. In order to mix the videos, it is necessary to additionally perform a process of decoding, of mixing where the multiple videos are rendered according to a pre-determined layout so as to create a new video, and of encoding. Therefore, mixing is a relatively costly operation, but is a core work, and servers equipped with the MCU functions are distributed at usually high cost.

When mixing the videos, the terminal processes one video so technically, there is no difference with 1:1 conferencing. However, in the video that the MCU provides, videos provided from multiple points are combined in the form of Picture-by-Picture (PBP), Picture-in-Picture (PIP), or the like. Further, there is virtually no difference in the bandwidth required at the terminal side, compared to 1:1 conferencing.

<Multi-videoconferencing in a non-standard videoconferencing system>

In the non-standard videoconferencing system, the video is processed without using the standard MCU. When connection to the standard video terminal is required, a separate gateway is used. The terminals of the multiple points go through a procedure of logging into one server and participating in a particular conference room. Some non-standard products perform peer-to-peer (P2P) processing without a server.

In the non-standard videoconferencing system, the reason for not using the MCU or a device performing the MCU function is that implementation of the MCU function requires a costly high-performance server. Instead of performing video mixing, a widely used method is that each terminal simply relays a video generated by itself to other participants (terminals of other points). Compared to the mixing method, the relay method uses less system resource of the server, but the network bandwidth required for video relay increases exponentially.

For example, when calculated under assumption that five people participate in the same conference room and view screens of other participants all together, one person's video is transmitted to the server and the other four people's videos need to be received, which requires 25 times (5×5) the bandwidth. When ten videoconferencing terminals are participating, 100 times (10×10) the band is required. As the number of videoconferencing participants increases, the required bandwidth increases exponentially.

<Token acquisition for document videoconferencing>

The conventional general videoconferencing terminal is capable of simultaneously outputting a main video screen and a document video screen to two display devices, respectively. However, much inexpensive videoconferencing equipment supports only single display output. The videoconferencing terminal in which only a single display is supported may or may not support H.239 or BFCP for document videoconferencing.

When a single display displays the document video according to H.239 or BFCP protocol, the screen is commonly divided for display. Also, the terminal itself may provide several layouts for displaying two videos in various forms. Also, in the terminal, a function of selecting one among the main video and the document video for enlargement is mostly supported.

As described above, the videoconferencing terminal is capable of transmitting one video, but is also capable of further transmitting the document video by using H.239 or BFCP technique. In order to transmit the document video, the presenter needs to obtain a presenter token. Only one terminal (specifically, one point) among the terminals participating in the videoconferencing is allowed to have the token. Because of this, only the terminal that obtains the presenter token is capable of simultaneously transmitting the main video of the participant and the document video to the server.

<Telepresence>

In the meantime, major companies such as Cisco Systems, Inc., Polycom, Inc., etc. offer extremely costly videoconferencing equipment using telepresence technology. This equipment is capable of supporting three or four-display output as well as transmitting as many videos as the number of supported output displays without the presenter token. In the related industry, the function of transmitting multiple videos for videoconferencing is regarded as the unique function of telepresence equipment.

The telepresence equipment is not capable of interworking with a general videoconferencing terminal. Costly gateway equipment separately provided is required for interworking. Despite of interworking in such a manner, the video quality is much lower than that of the teleconversation between general videoconferencing equipment. For these reasons, videoconferencing terminals supporting three-display output are relatively rare and are limited in expandability due to the limitation of standard technology.

<Recognition and capture of the talker>

The videoconferencing system installed in the conference room requires a camera tracking system to dynamically capture several participants' faces in the conference room. When using the conventional camera tracking system, the talker among the people who participate in the videoconferencing is recognized and the video of the talker is provided to the counterpart side for image processing such as displaying as a main image, or the like.

Therefore, the camera tracking system requires a camera for capturing the talker and means for recognizing the talker. The conventional camera tracking system is manufactured and supplied separately from the videoconferencing terminal.

Cameras connected to the videoconferencing terminal are usually divided into a fixed camera that faces only the designated direction and a pan-tilt-zoom (PTZ) camera of which the camera direction and the focal length are freely adjusted. Most low-cost videoconferencing terminal products have cameras fixed integrally to the monitors. Mid-cost products are provided with PTZ cameras. However, most extremely costly videoconferencing equipment for telepresence which support three or more multiscreens is provided with a fixed camera installed on each screen.

Most PTZ cameras support a "preset function" in which a particular position is recorded using a method of storing a panning angle and a tilting angle from a reference point. When the user inputs a recorded preset identification number, the camera changes its position from the current position to the preset position and performs capturing. Depending on the preset method, it is possible to perform capturing with pre-determined magnification.

The conventional camera tracking systems are manufactured separately from the terminals for videoconferencing and are usually equipment at a high cost ranging from several thousand dollars to several tens of thousand dollars. The camera tracking system is equipment installed on the terminal side. Therefore, it is more expensive to establish the videoconferencing system in several conference rooms.

To recognize the talker, the camera tracking system has a microphone and a button provided at every designated spot on the conference table. Regarding the microphone, a so-called "goose-neck microphone" in the curved shape like a goose neck is commonly used. Most goose-neck microphones have integrated buttons for speaking. As the participant presses the microphone button on his/her spot, the talker's location is recognized because the location of the microphone is fixed. Once the preset of the camera is stored considering the location of the microphone, when the participant presses the microphone button on his/her spot, the position of the camera is changed to the preset location.

Another camera tracking system known in the related art proposes a method of recognizing a talker according to the volume level of the voice input to a microphone instead of the mechanical method in which the button, or the like is operated. When a particular talker speaks in the videoconferencing, the talker's voice may be input to the talker's microphone as well as other nearby microphones. However, since the volume of the voice input to the talker's microphone is generally the largest, the tracking system installed at the terminal side compares the strengths of the voice signals input from the several microphones to recognize the talker's location.

<An audio device of the videoconferencing system>

Most videoconferencing terminals have an echo cancellation function. For example, assuming that a terminal A and a terminal B conduct videotelephony, the terminal A receives the talker's voice through the microphone and transmits the same to the terminal B that is the videotelephony counterpart, but the talker's voice is not output to the speaker of the terminal A. Meanwhile, the audio signal transmitted from the terminal B is output through the speaker of the terminal A, whereby the conference proceeds.

When the audio signal transmitted from the terminal B is output through the speaker of the terminal A, the audio signal is input through the microphone of the terminal A, resulting in echo. However, the terminal A having an echo cancellation function removes, from the signal input through the microphone, the waveform that is the same as the waveform in the audio signal transmitted from the terminal B, thereby removing the echo.

The terminal A does not directly output, to the speaker, the audio signal input through the microphone. Therefore, even though the terminal A does not remove the echo signal, this is not directly output to the speaker of the terminal A. The echo signal is transmitted to the terminal B, and the terminal B outputs the echo signal as it is because the echo signal is the audio signal provided by the terminal A, which results echo. Further, the echo signal is transmitted back to the terminal A in the same process. The terminal A outputs the echo signal to the speaker because the echo signal is the audio signal provided from the terminal B. This process occurs repeatedly in succession, resulting a loud noise.

The echo cancellation method is to remove, from the input audio signal, the waveform that is the same as that in the output audio signal. Generally, there is a delay time ranging from several ten to several hundred milliseconds (ms) for the audio to be played from the output device and be inputted again to the microphone for processing. The delay times vary from device to device, and thus it is not easy to detect the audio signal to be removed from the input audio signal by using the echo cancellation function. The fact that the signal strength when input to the microphone is different from the output signal strength makes removal of voice waveform difficult. Naturally, echo cancellation is more difficult in space with a lot of noise or echoing sound. Therefore, echo cancellation is a complex and difficult technique in the field of videoconferencing.

**Documents of Related Art**

KR 10-2016-0062787 A (method of mixing multiple video feeds for video conference, and video conference terminal, video conference server, and video conference system using the method)

**Disclosure**

**Technical Problem**

The present invention is intended to propose a videoconferencing server capable of providing a multipoint videoconferencing service and providing a logical terminal service in which multiple videoconferencing terminals are processed as one videoconferencing point.

The present invention is intended to propose a videoconferencing server capable of controlling capture by a camera according to various camera tracking events, even without a separate camera tracking system.

The present invention is intended to propose a videoconferencing server and a camera tracking method therefor, the videoconferencing server being capable of generating a camera tracking event by recognizing the talker's location using multiple audio signals or video signals provided from one logical terminal.

Also, the present invention is intended to propose a videoconferencing server and a camera tracking method therefor, the videoconferencing server being capable of generating a camera tracking event according to a control command provided from a videoconferencing point.

**Technical Solution**

In order to achieve the above objectives, according to the present invention, there is provided a videoconferencing service provision method of a videoconferencing server, the method including a registration step, a call connection step, a source reception step, a target recognition step, and a camera tracking step, whereby a logical terminal operates as one virtual videoconferencing point.

At the registration step, multiple physical terminals are registered as a first logical terminal so that the multiple physical terminals operate as one videoconferencing point. Herein, an arrangement between multiple microphones connected to the multiple physical terminals may be registered in registration information of the first logical terminal. At the call connection step, videoconferencing between multiple videoconferencing points is connected, and with respect to the first logical terminal, individual connection to the multiple physical terminals constituting the first logical terminal is provided. At the source reception step, source videos and source audio signals provided by the multiple videoconferencing points are received, and with respect to the first logical terminal, the source video and the source audio signal are received from each of the multiple physical terminals.

At the target recognition step, on the basis of the arrangement between the multiple microphones, one selected among the source videos, the source audio signals, and control commands provided by the multiple physical terminals is used to recognize a location of a target subjected to tracking control in the first logical terminal. Accordingly, at the camera tracking step, on the basis of the target location, one of cameras connected to the multiple physical terminals is selected as a tracking camera, and the tracking camera is controlled to capture the target.

According to an embodiment, at the target recognition step, on the basis of the arrangement between the multiple microphones and strengths of the source audio signals provided by the multiple physical terminals, the location of the target in the first logical terminal may be recognized.

As another method of the target recognition, the control commands may be used. Herein, the control command may be one of the identification numbers of the camera positions, and is preferably provided from the multiple physical terminals constituting the first logical terminal, from a user mobile terminal, or from the other videoconferencing points.

According to another embodiment, when the physical terminals included in the first logical terminal preset multiple camera positions, at the camera tracking step, an identification number of the camera position corresponding to the location of the target recognized at the target recognition step may be provided to the physical terminal to which the tracking camera is connected among the multiple physical terminals. Through this, the tracking camera may change the position and may track the target.

According to still another embodiment, in the registration information of the first logical terminal, arrangements among pre-determined virtual target locations, the multiple microphones connected to the multiple physical terminals, and the identification numbers of the camera positions may be registered. In this case, at the camera tracking step, the virtual target location corresponding to the target location may be identified, and the tracking camera and the identification number of the camera position may be extracted from the registration information. Further, according to still another embodiment, the registration step may include, displaying, to a user, a screen for schematically receiving the arrangements among the pre-determined virtual target locations, the multiple microphones connected to the multiple physical terminals, and the identification numbers of the position.

In the meantime, the videoconferencing service provision method of the videoconferencing server of the present invention may further include: a multiscreen video provision step where among all the source videos received at the source reception step, the videos provided by the other videoconferencing points are distributed to the multiple physical terminals of the first logical terminal;

an audio processing step where from an entire source audio received at the source audio reception step, the audio signals provided by the other videoconferencing points are mixed into an output audio signal to be provided to the first logical terminal; and an audio output step where the output audio signal is transmitted to an output-dedicated physical terminal among the multiple physical terminals belonging to the first logical terminal.

According to an embodiment, at the multiscreen video provision step, the source video received from each of the multiple physical terminals of the first logical terminal may be placed in the videos to be provided to the other videoconferencing points, and the source video provided from the physical terminal corresponding to the target location among the multiple physical terminals may be placed in a region set for the target. Alternatively, at the multiscreen video provision step, when the point of which the audio signal has the highest strength among the multiple videoconferencing points is a logical terminal, all the source videos provided from the logical terminal may be placed in a region set for the target.

Further, the call connection step may include: receiving a call connection request message from a calling party point; inquiring, while connecting a calling party and a called party in response to the receiving of the call connection request message, whether the calling party or the called party is the first logical terminal; creating, when the calling party is the physical terminal of the first logical terminal as a result of the inquiring, individual connection to the other physical terminals of the first logical terminal; and creating, when the called party requested for call connection is a physical terminal of a second logical terminal as a result of the inquiring, individual connection to the other physical terminals of the second logical terminal.

The present invention also applies to the videoconferencing server for providing the videoconferencing service. The server of the present invention includes a terminal registration unit, a teleconversation connection unit, a target recognition unit, and a camera tracking unit.

The terminal registration unit registers multiple physical terminals as a first logical terminal so that the multiple physical terminals operate as one videoconferencing point. An arrangement between multiple microphones connected to the multiple physical terminals is registered in registration information of the first logical terminal. The teleconversation connection unit is configured to, connect videoconferencing between multiples videoconferencing points including the first logical terminal, provide individual connection to the multiple physical terminals constituting the first logical terminal with respect to the first logical terminal, receive source videos and source audio signals from the multiple videoconferencing points, and receive the source video and the source audio signal from each of the multiple physical terminals with respect to the first logical terminal.

The target recognition unit uses, on the basis of the arrangement between the multiple microphones, one selected among the source videos, the source audio signals, and control commands provided by the multiple physical terminals to recognize a location of a target subjected to tracking control in the first logical terminal. The camera tracking unit selects, on the basis of the target location, one of cameras connected to the multiple physical terminal as a tracking camera, and controls the tracking camera to capture the target.

## Advantageous Effects

The videoconferencing server of the present invention can be implemented in such a manner that the multiple videoconferencing terminals (physical terminal) having a limited number (generally, one or two) of displays are logically grouped to operate as the logical terminal which operates as one videoconferencing point. Through distribution of videos provided to the multiple physical terminals constituting the logical terminal, the videoconferencing server can perform processing as if the logical terminal supports a multiscreen.

In multipoint videoconferencing, the videoconferencing server distributes the videos from other videoconferencing points according to the number of screens, that is, display devices, which the logical terminal has. Thus, in terms of the physical terminals included in the logical terminal, the number of other videoconferencing points to be displayed is reduced compared to the related art, thereby reducing the complexity of the videos displayed on one screen. As the complexity of the videos is lowered, the video quality is improved in, for example, a poor-performance physical terminal or a slow network.

The logical terminal of the present invention is implemented only through the internal processing by the videoconferencing server, and there is no direct connection between the physical terminals. Thus, even if the video codecs differ, the system performances differ, or the physical terminals are produced by different manufacturers, there is no problem of being grouped into one logical terminal for processing. Naturally, the multiscreen is provided through the logical terminal, so that there is no need to update the system resources of individual videoconferencing terminals for supporting the multiscreen.

According to the present invention, the audio signals can be provided in such a manner that the logical videoconferencing terminal composed of the multiple physical terminals receives the audio as one videoconferencing terminal. Therefore, even though the multiple physical terminals belonging to the logical terminal individually have speakers, only a particular output-dedicated physical terminal outputs the audio signal, whereby the logical terminal operates as one videoconferencing point.

According to the present invention, the videoconferencing server can control capture by the camera on the logical terminal side depending on various situations. For example, in terms of the logical terminal composed of the multiple videoconferencing terminals, the videoconferencing server may recognize a target (for example, a talker) to be subjected to camera tracking control, and may perform control so that one of the multiple cameras that the logical terminal has captures the talker. Also, the videoconferencing server can generate a camera tracking event according to the control command provided from the videoconferencing point.

Since the logical terminal of the present invention is composed of the multiple videoconferencing physical terminals, it is possible to solve the problem that the conventional camera tracking system operating at the individual videoconferencing terminal level used in the related art is unable to recognize the talker and perform camera tracking.

Also, according to the present invention, in the process of processing the audio signals for the multiple physical terminals as one logical terminal, it is possible to remove the echo included in the audio signals input through the physical terminal that does not output the audio signals because it is not the output-dedicated physical terminal.

## Description of Drawings

FIG. 1 is a diagram illustrating a configuration of a videoconferencing system according to an embodiment of the present invention,
FIG. 2 is a diagram illustrating multi-videoconferencing connection where all the three points in FIG. 1 participate,
FIG. 3 is a diagram illustrating a multiscreen videoconferencing service provision method of the videoconferencing server of the present invention,
FIG. 4 is an exemplary diagram provided to describe a camera tracking method of the present invention,
FIG. 5 is an exemplary diagram illustrating a screen used in a process of registering a logical terminal of the present invention,
FIG. 6 is a flowchart provided to describe a camera tracking method of the present invention,
FIG. 7 is a diagram illustrating audio signal processing in the videoconferencing system in FIG 1,
FIG. 8 is a flowchart provided to describe an audio processing method of the present invention, and
FIG. 9 is a flowchart provided to describe an echo cancellation method in a logical terminal.

## Best Mode

Hereinafter, the present invention will be described in detail with reference to the accompanying drawings.

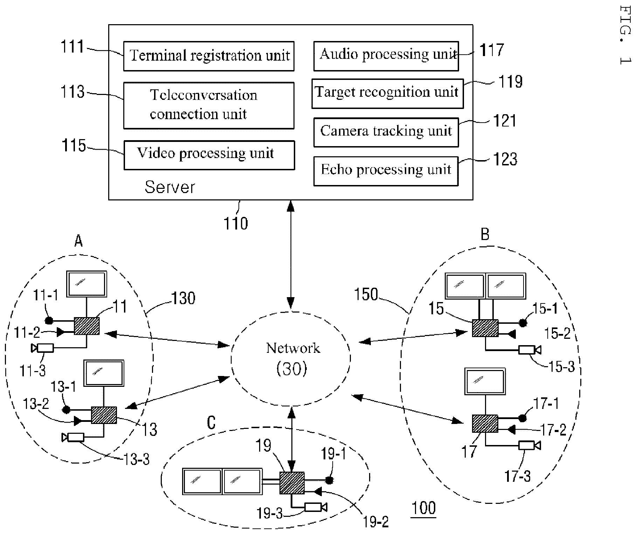

Referring to FIG. 1, a videoconferencing system 100 of the present invention includes a server 110 and multiple videoconferencing terminals that are connected over a network 30. The videoconferencing system supports 1:1 videoconferencing where two connection points are connected as well as multi-videoconferencing where three or more points are connected. The videoconferencing terminals 11, 13, 15, 17, and 19 shown in FIG.1 show connectable videoconferencing terminals, as an example.

The connection network 30 between the server 110 and the videoconferencing terminals 11, 13, 15, 17, and 19 is an IP network, and may include a heterogeneous network connected via a gateway or may be connected with the heterogeneous network. For example, a wireless telephone using a mobile communication network may be the videoconferencing terminal of the present invention. In this case, the network 30 includes the mobile communication network where connection takes place via a gateway to process an IP packet.

The server 110 controls the videoconferencing system 100 of the present invention, generally. In addition to functions of a conventional general server for processing videoconferencing, the server 100 includes a terminal registration unit 111, a teleconversation connection unit 113, a video processing unit 115, an audio processing unit 117, a target recognition unit 119, a camera tracking unit 121, and an echo processing unit 123.

The terminal registration unit 111 performs registration, setting, management, and the like of a physical terminal and a logical terminal, which will be described below. The teleconversation connection unit 113 controls videoconferencing call connection of the present invention. When the videoconferencing call is connected, the video processing unit 115 processes (mixing, decoding, encoding, and the like) the videos provided between the physical terminals and/or logical terminals, thereby implementing a multiscreen, similarly to telepresence.

The audio processing unit 117, which is the feature of the present invention, controls audio processing in the logical terminal. The target recognition unit 119 and the camera tracking unit 121 recognize a location of a target to be subjected to camera tracking control in the logical terminal and perform the camera tracking control. The echo processing unit 123 removes an echo with respect to the audio signal transmitted from the logical terminal.

Operation of the terminal registration unit 111, the teleconversation connection unit 113, the video processing unit 115, the audio processing unit 117, the target recognition unit 119, the camera tracking unit 121, and the echo processing unit 123 will be described again below.

## The logical terminal

The videoconferencing system 100 of the present invention presents the concept of a logical terminal. The logical terminal is a logical combination of multiple conventional general videoconferencing terminals as a single videoconferencing terminal. The logical terminal is composed of two or more videoconferencing terminals, but no direct connection is provided between the multiple videoconferencing terminals constituting the logical terminal. In other words, direct connection between the multiple videoconferencing terminals constituting the logical terminal is not required in configuring the logical terminal.

Hereinafter, in order to distinguish between the logical terminal and the conventional general videoconferencing terminal, the conventional general videoconferencing terminal is referred to as a "physical terminal". In other words, the logical terminal is merely a logical combination of multiple physical terminals for videoconferencing.

All the videoconferencing terminals 11, 13, 15, 17, and 19 included in the videoconferencing system 100 in FIG. 1 are physical terminals. The physical terminal supports the standard protocol related to videoconferencing, and is not a terminal capable of providing the telepresence service described in Background Art but the videoconferencing terminal to which one display device is connected or to which two display devices are connected for document conferencing.

Examples of the standard protocol include H.323, SIP (Session Initiation Protocol), and the like. Naturally, among the videoconferencing terminals 11, 13, 15, 17, and 19, the terminal supporting document conferencing supports H.239 and BFCP (Binary Floor Control Protocol). For example, in the case where the SIP session is created between the server 110 and the physical terminals 11, 13, 15, 17, and 19 according to the SIP protocol, a video signal or audio signal described below is transmitted in the form of RTP packet.

The physical terminals 11, 13, 15, 17, and 19 have a video/voice codec, and have microphones 11-1, 13-1, 15-1, 17-1, and 19-1 converting the talkers' voices into audio signals, speakers 11-2, 13-2, 15-2, 17-2, and 19-2 for audio output, and cameras 11-3, 13-3, 15-3, 17-3, and 19-3, respectively.

Each physical terminal serves as one videoconferencing point in the conventional videoconferencing system. However, the multiple videoconferencing terminals belonging to the logical terminal of the present invention operate as a single terminal as a whole and operate as a single videoconferencing point as a whole. Thus, the logical terminal is one videoconferencing point that has as many display devices as the total number of display devices which are individually owned by the multiple physical terminals, namely, the constituent members of the logical terminal. When necessary, the logical terminal designates one of the multiple constituent terminals as a "representative terminal". No matter how many physical terminals the logical terminal includes, the logical terminal is treated as a single videoconferencing point in videoconferencing.

For example, FIG. 1 shows the multi-videoconferencing system 100 where a first point A, a second point B, and a third point C are connected to each other. A first logical terminal 130 is placed at the first point A, a second logical terminal 150 is placed at the second point B, and a fifth physical terminal 19 is placed at the third point C, so the system 100 shown in FIG. 1 is in a state where two logical terminals 130 and 150 and one physical terminal 19 are connected by the server 110 for videotelephony. The first logical terminal 130 is composed of a first physical terminal 11 and a second physical terminal 13 that have one display device each, and the second logical terminal 150 is composed of a third physical terminal 15 having two display devices and a fourth physical terminal 17 having one display device.

The physical terminals 11, 13, 15, 17, and 19 may be provided with a fixed camera connected or with a pan-tilt-zoom (PTZ) camera connected. However, in order to perform the camera tracking function that the present invention proposes, (first) the cameras 11-3, 13-3, 15-3, and 17-3 connected to the respective physical terminals 11, 13, 15, and 17 belonging to at least the logical terminal need to be PTZ cameras. (Second) Each of the physical terminals belonging to the logical terminal needs to be competent to preset at least one camera position. (Third) Last, the physical terminal belonging to the logical terminal needs to allow standard or non-standard Far End Camera Control (FECC) with respect to the preset of the camera. For example, it is assumed that the first physical terminal 11 belonging to the first logical terminal 130 presets a first position and a second position. When the server 110 provides the first physical terminal 11 with a preset identification number related to the first position, the first physical terminal 11 performs control in such a manner that a first camera 11-3 takes the first position. The first camera 11-3 takes the first position through panning/tilting.

The logical terminal is a logical component managed by the server 110 and the standard protocol between the server 110 and the terminal supports only 1:1 connection, and thus the connection between the server 110 and the logical terminal refers to that the multiple physical terminals constituting the logical terminal are individually connected to the server 110 according to the standard protocol. For example, according to the SIP protocol, FIG. 1 shows that regardless of the configuration of the logical terminal, each of the five physical terminals 11, 13, 15, 17, and 19 has the SIP session created to the server 110 so that a total of five sessions are created.

According to the present invention, the server 110 of the videoconferencing system supports the following connections.

### (1) Videoconferencing in which one physical terminal and one logical terminal are connected

For example, this relates to a case in which the fifth physical terminal 19 in FIG. 1 calls the first logical terminal 130. The server 110 simultaneously or sequentially calls the first and the second physical terminal 11 and 13 constituting the first logical terminal 130 for connection.

### (2) Videoconferencing in which a single logical terminal calls one physical terminal

For example, this relates to a case in which the user causes the first physical terminal 11 that is the representative terminal of the first logical terminal 130 to call the fifth physical terminal 19. The server 110 simultaneously or sequentially calls the second physical terminal 13 that is the other physical terminal of the first logical terminal 130 and the fifth physical terminal 19 that is a called party for connection.

### (3) Videotelephony in which one logical terminal calls another logical terminal

For example, this relates to a case where the first logical terminal 130 in FIG. 1 calls the second logical terminal 150. When the user uses the first physical terminal 11 that is the representative terminal of the first logical terminal 130 to call the second logical terminal 150, the server 110 simultaneously or sequentially calls the two physical terminals 15 and 17 constituting the second logical terminal 150, and calls the second physical terminal 13 that is the terminal other than the representative terminal of the calling party, for connection.

### (4) Multipoint videoconferencing

The videoconferencing system of the present invention supports, as shown in FIG. 1, connection among three or more points wherein the logical terminal is connected as one point. One logical terminal and two physical terminals may be connected; two or more logical terminals and one physical terminal may be connected; or two or more logical terminals may be connected to each other. The multipoint connection may be processed using a method known in the related art. However, there is a difference in that when a newly participating point is a logical terminal, connection to all the physical terminals that are constituent members of the logical terminal needs to be provided.

### <Multiscreen support>

The videoconferencing system 100 of the present invention may provide a multiscreen, similarly to telepresence, using a logical terminal structure. Although the logical terminal is a virtual terminal, the logical terminal is processed as having as many screens as all the multiple physical terminals, namely, the constituent members, possibly provide.

The server 110 reconstructs the multi-videoconferencing video using a method of matching the number (m1, or the number of videos that the server needs to provide to each logical terminal) of display devices included in the logical terminal with the total number (M, the number of source videos) of physical terminals included in the points that are connected to videoconferencing, thereby re-editing m3 videos into m1 videos with respect to the logical terminal for provision. Herein, m3, as the number of source videos that the logical terminal needs to display for videoconferencing, is shown in Equation 1 below.

[Equation 1]

$$m_3 = M - m_2$$

Herein, $m_2$ is the number of physical terminals constituting the logical terminal.

In the meantime, each physical terminal may make a setting or a request in such a manner as to display its video (source video). In this case, when with respect to each logical terminal, the $m_3$ videos are re-edited into the m1 videos and the resulting videos are distributed to each of the physical terminals constituting the logical terminal, the source videos provided by the corresponding physical terminals are also mixed for provision.

Unless m3 and m1 are the same value, the server 110 needs to perform reprocessing in which the source videos are mixed. However, according to an embodiment, with respect to the logical terminal, the m3 videos may not re-edited into the m1 videos, and the m3 videos may be sequentially provided at regular time intervals. For example, in the case of m3=3 and m1=1, three source videos are not re-edited through mixing, or the like, and the three source videos may be sequentially provided. In this case, relay-type videoconferencing processing is possible, which was impossible in the conventional standard videoconferencing terminal.

In the meantime, regardless of the configuration of the logical terminal, any physical terminal participating in the videoconferencing of the present invention may provide two source videos when a presenter token is obtained. For example, as a result of obtaining the presenter token, the first physical terminal 11 may provide a main video with a video for document conferencing to the server 110. In this case, M is the sum of one and the total number of physical terminals included in the points connected to videoconferencing.

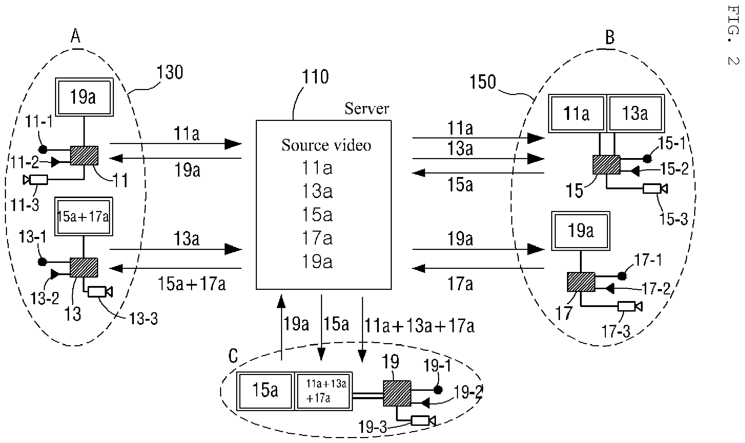

FIG. 2 is a diagram illustrating multi-videoconferencing connection where all the three points in FIG. 1 participate. It is assumed that the first logical terminal 130, the second logical terminal 150, and the fifth physical terminal 19 are connected to each other so that multi-videoconferencing connection among three points is provided. Referring to FIG. 2, the number of the physical terminals 11, 13, 15, 17, and 19 involved in this videoconferencing is five (M=5). That is, five source videos 11a, 13a, 15a, 17a, 19a that the five physical terminals 11, 13, 15, 17, and 19 provide are provided to the server 110, so the server 110 edits the five source videos according to the number (m1) of display devices that each point has and provides the result to each point.

The first logical terminal 130 has two display devices that the first physical terminal 11 and the second physical terminal 13 have, which refers to m1=2 and m2=2. In this multi-videoconferencing with three points, physical terminals connected to the first logical terminal 130 for videoconferencing are the third to fifth physical terminals 15, 17, and 19, which are three (m3, 3=5-2) in number, so three source videos that the three physical terminals provide need to be re-edited into two videos for display. Apart from this, which source video to be displayed on which screen may be determined. In FIG. 2, the first physical terminal 11 displays the source video from the fifth physical terminal 19, and the second physical terminal 13 displays one video obtained by mixing the source videos of the third physical terminal 15 and the fourth physical terminal 17.

The third physical terminal 15 has two display devices and the fourth physical terminal 17 has one display device, so the second logical terminal 150 has the three display devices, which refers to m1=3 and m2=2. Therefore, with respect to the second logical terminal 150, the server 110 causes the source videos that the three physical terminals provide to be displayed as three videos. Since the number of source videos to be displayed and the number of screens are the same, one for each is displayed. Apart from this, which source video to be displayed on which screen may be determined. In FIG. 2, the third physical terminal 15 displays the source videos of the first and the second physical terminal 11 and 13, and the fourth physical terminal 17 displays the source video that the fifth physical terminal 19 provides.

Similarly to the related art, the fifth physical terminal 19 is one videoconferencing point as it is, but Equation 1 is applied equally. The fifth physical terminal 19 is related to m1=2 and m2=1, so the server 110 re-edits four source videos (m3=5-1) into two (m1) videos and provides the result to the fifth physical terminal 19. The fifth physical terminal 19 needs to display the source videos that a total of four physical terminals 11, 13, 15, and 17 of the first logical terminal 130 and the second logical terminal 150 provide on the two display devices, so the four source videos are appropriately edited to be displayed as two videos.

When the third physical terminal 15 of the second logical terminal 150 obtains the presenter token, two source videos are provided. In this case, the second logical terminal 150 provides a total of three source videos, and M is 6. The number of source videos to be processed by the server 110 for transmission to the first logical terminal 130, the second logical terminal 150, and the fifth physical terminal 19 is greater than that of the description above by one.

**A videoconferencing service (call connection and video processing) for the logical terminal**

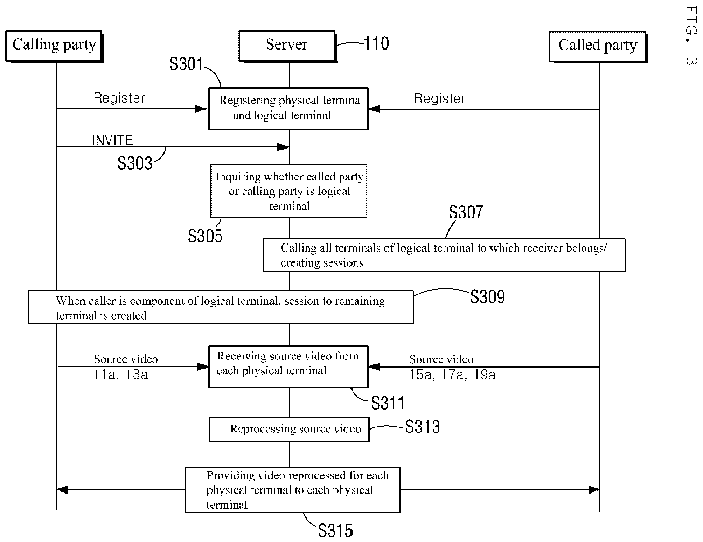

Hereinafter, a multiscreen videoconferencing service provision method of the server 110 will be described with reference to FIG. 3. For convenience of description, a teleconversation connection process in which the first physical terminal 11 of the first logical terminal 130 in FIG. 2 is the calling party and the second logical terminal 150 is the called party will be mainly described. First, a process of registering the logical terminal is required.

<A registration step of the logical terminal: S301>

The terminal registration unit 111 of the server 110 executes registration of the physical terminal and the logical terminal and manages the registration information. Registration of the physical terminal precedes registration of the logical terminal, or simultaneous registration is performed. For registration of each physical terminal, an IP address of each terminal is essential.

The process of registering the physical terminal may be performed by various methods known in the related art. For example, the registration of the physical terminal may be executed using a location registration process through a register command on the SIP protocol. Herein, a telephone number, or the like of the physical terminal may be included. When the location of the physical terminal is registered, the server 110 determines whether the physical terminal is currently turned on and is in operation.

In the logical terminal, an identification number for being distinguished from another logical terminal or physical terminals may be designated and registered. In the registration of the logical terminal, the physical terminals included in the logical terminal are designated, and the number of the display devices connected to each physical terminal is registered. According to an embodiment, the arrangement (or relative positions) between the display devices included in the logical terminal, a video mixing method (including a relay method) or a layout of the mixed video according to the number (m3) of source videos, or the like may be set. For example, the terminal registration unit 111 receives configuration information for configuring the first physical terminal 11 and the second physical terminal 13 as the first logical terminal 130 for registration and management. In the registration of the logical terminal, a web page that the terminal registration unit 111 provides may be used, or a separate access terminal may be used.

Further, in the registration information of the logical terminal, one of the physical terminals constituting the logical terminal described below is registered as an "output-dedicated physical terminal" described below. An audio signal ("output audio signal" described below) that a counterpart videoconferencing point provides is output through a speaker that the output-dedicated physical terminal among the physical terminals constituting the logical terminal has.

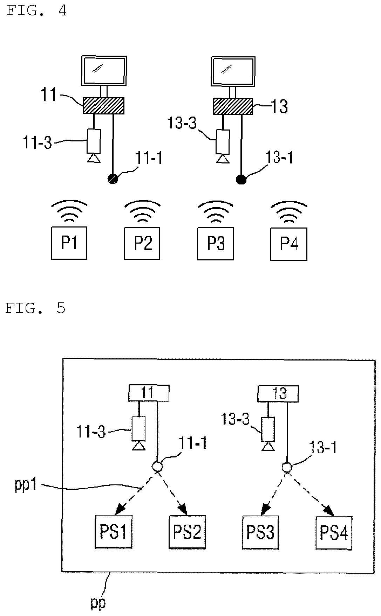

Further, in the registration information of the logical terminal, mutual mapping information with respect to information on the physical terminal that is the constituent member, to a pre-determined preset of the camera, and to a "virtual target location" that is subjected to camera tracking control described below is registered. The preset is mapped to a particular camera and the virtual target location, and the camera is mapped to a particular physical terminal. Therefore, when the server 110 identifies the target location that is subjected to the camera tracking control, preset information, the camera, and the physical terminal that are mapped to the target location are identified. This registration is the same as registration of a preset state of each camera together with the arrangement between all cameras and microphones that each logical terminal has, as shown in FIG. 4. According to an embodiment, to register the cameras and the microphones for the logical terminal, the terminal registration unit 111 may display a registration screen (pp) as shown in FIG. 5 to a manager.

According to FIGS. 4 and 5, when viewed from the talker, it is registered that a first microphone 11-1 and a first camera 11-3 connected to the first physical terminal 11 are placed on the left and a second microphone 13-1 and a second camera 13-3 connected to the second physical terminal 13 are placed on the right. Herein, in FIG. 4, P1, P2, P3, and P4 denote the "virtual target locations". The first camera 11-3 may set a preset PS1 with respect to the camera position for capturing the P1 and a preset PS2 with respect to the camera position for capturing the P2. The second camera 13-3 sets a preset PS3 with respect to the camera position for capturing the P3 and a preset PS4 with respect to the camera position for capturing the P4. Through the registration screen (pp) shown in FIG. 5, the manager may adjust the arrangement of the first microphone 11-1 and the second microphone 13-1, may adjust the arrangement between the identification numbers PS1, PS2, PS3, and PS4 for the camera position preset according to the virtual target location, and may register the cameras, the microphone, and the preset setting states of the cameras for the first logical terminal 130 in a manner that connects the cameras and the presets using arrows (pp1).

<An outgoing call-connection step for videoconferencing: S303>

Videoconferencing call establishment between videoconferencing points is initiated as the teleconversation connection unit 113 of the server 110 receives a call connection request from one point. In the case of the SIP protocol, the teleconversation connection unit 113 receives an SIP signaling message, INVITE. In the example in FIG. 2, the first physical terminal 11 of the first logical terminal 130 calls the third physical terminal 15 of the second logical terminal 150, so the teleconversation connection unit 113 receives the INVITE message in which the first physical terminal 11, which is the calling party, calls the third physical terminal 15 using the telephone number or the IP address of the third physical terminal 15.

<Inquiring whether a caller and/or a receiver is the logical terminal: S305>

The teleconversation connection unit 113 of the server 110 inquires of the terminal registration unit 111 whether the called-party telephone number is one of the telephone numbers (or IP addresses) of the respective physical terminals constituting the logical terminal. Similarly, the teleconversation connection unit 113 of the server 110 inquires of the terminal registration unit 111 whether the calling party has one of the telephone numbers (or IP addresses) of the respective physical terminals constituting the logical terminal. Through this, the teleconversation connection unit 113 determines whether the call connection is connection to the logical terminal.

According to an embodiment, when the called party is the physical terminal of the logical terminal, the teleconversation connection unit 113 additionally identifies whether the physical terminal is the representative terminal of the logical terminal. When the physical terminal is not the called-party representative terminal, the called party may not be processed as the logical terminal. Also in the case of the calling party, whether the calling party is the representative terminal of the logical terminal is additionally identified. When being not the calling-party representative terminal, the calling party may not be processed as the logical terminal.

<Videoconferencing connection: S307 and S309>

When the called-party telephone number is the logical terminal's number, the teleconversation connection unit 113 performs a procedure for creating SIP sessions to all the physical terminals belonging to the called-party logical terminal. In the example in FIG. 2, the called party is the second logical terminal 150, so the teleconversation connection unit 113 individually creates SIP sessions to the third physical terminal 15 and the fourth physical terminal 17. Herein, the teleconversation connection unit 113 may transmit the INVITE messages to the third physical terminal 15 and the fourth physical terminal 17 simultaneously or sequentially at step S307.

In the example in FIG. 2, the calling party is also the logical terminal, so the teleconversation connection unit 113 creates the SIP session to the second physical terminal 13 of the first logical terminal 130. In the example in FIG. 2, when the fifth physical terminal 19 participates in the videoconferencing, the SIP session to the fifth physical terminal 19 is also created. Accordingly, the first logical terminal 130, the second logical terminal 150, and the fifth physical terminal 19 participate in the videoconferencing, and thus a total of five SIP sessions are created at step S309.

All the physical terminals of the called party receiving the INVITE and/or the calling party perform negotiation in which a video, a voice codec, or the like is selected through Session Description Protocol (SDP) information. When the negotiation is successfully completed, the actual session is established and the call is connected.

<A step of receiving the source video from each single physical terminal: S311>

As described above, since the teleconversation connection of the logical terminal is actually the connection to the individual physical terminals constituting the logical terminal, multiple sessions are established. The physical terminals constituting the logical terminal individually generate the source videos and transmit the same to the server 110. The source video is transmitted in the form of an RTP packet with the source audio signal described below.

Therefore, in the case of FIG. 2, since the first logical terminal 130, the second logical terminal 150, and the fifth physical terminal 19 participate in the videoconferencing, the teleconversation connection unit 113 receives five source videos 11a, 13a, 15a, 17a, and 19a that the five physical terminals 11, 13, 15, 17, and 19 provide, respectively.

<Reprocessing of the source video by the server: S313>

The video processing unit 115 of the server 110 decodes the RTP packets received through the SIP sessions to obtain the source videos that all the physical terminals 11, 13, 15, 17, and 19 participating in the videoconferencing provide, and mixes and encodes the source videos for rendering into the video for each point. In other words, the video processing unit 115 may re-edit m3 videos into m1 videos with respect to each point.

The video processing unit 115 performs mixing on the source videos according to a layout pre-determined for each logical terminal or each physical terminal or according to a layout requested by each terminal.

As described above, without video processing by the video processing unit 115, the teleconversation connection unit 113 may provide the source videos sequentially at pre-determined time intervals so that the source videos are displayed in relays. In this case, transmission takes place as it is without mixing or the like. When it is necessary to be matched with the video codec of the terminal, change of the video format or transcoding is sufficient therefor.

<Transmitting of the encoded video data to each physical terminal: S315>

The teleconversation connection unit 113 provides the videos that the video processing unit 115 processes for the respective physical terminals 11, 13, 15, 17, and 19, to the respective physical terminals 11, 13, 15, 17, and 19 that participate in the videoconferencing. As a result, each point participating in the videoconferencing may receive a service similar to telepresence which uses a multiscreen.

By the above-described method, the multiscreen for videoconferencing of the videoconferencing system 100 of the present invention is processed.

**(Embodiment) Another method of step S305**

When registering the logical terminal, the terminal registration unit 111 generates a virtual telephone number for the logical terminal to register the same. In this case, at step S305, only when the called-party telephone number is the virtual telephone number of the logical terminal, the called party is processed as the logical terminal.

**Camera tracking in logical terminal**

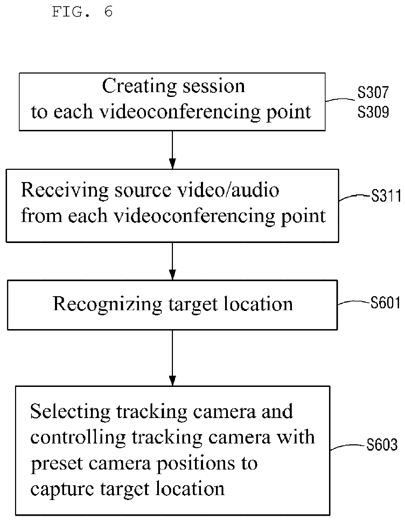

Hereinafter, the camera tracking method in the logical terminal will be described with reference to FIG. 6.

<Reception of a source video and a source audio>

Through steps S301 to S309, when all the physical terminals 11, 13, 15, 17, and 19 participating in the videoconferencing have the SIP sessions individually created to the server 110, regardless of the configuration of the logical terminal, all the physical terminals 11, 13, 15, 17, and 19 provide the server 110 with the source videos obtained by the cameras 11-3, 13-3, 15-3, 17-3, and 19-3 and the source audio signals received by the microphones 11-1, 13-1, 15-1, 17-1, and 19-1 at S311 in the form of RTP packets. Thus, the teleconversation connection unit 113 of the server 110 receives all the RTP packets provided by all the physical terminals 11, 13, 15, 17, and 19 participating in the videoconferencing. Although the step S311 in FIG. 3 refers to only the reception of the source video, the source video and the source audio are received together through the RTP packet.

According to an embodiment, the physical terminal belonging to the logical terminal may provide its control command to the server 110. Herein, the control command includes a command generated when the microphone button is operated, or the like.

<Recognition of a target subjected to camera tracking: S601>

The target recognition unit 119 recognizes a location of the target to be subjected to the camera tracking control. A camera tracking event is an event that controls capture by the camera placed on the logical terminal side, wherein ① the location of the target is recognized through a process of automatically recognizing the location of the talker or ② the location of the target is recognized using a control command that is provided from the logical terminal or physical terminal side.

The recognition of the target location by the target recognition unit 119 is the same as the recognition of the talker's location for each logical terminal, except for some exceptional cases. In order to recognize the location of the target, the target recognition unit 119 recognizes, on the basis of the registration information related to the microphone registered by the logical terminal and to the preset, the location of the target for the logical terminal by using one selected among the source videos, the source audio signals, and the control commands that the multiple physical terminals constituting the logical terminal provide. Therefore, herein, the control command is usually related to the talker location and corresponds to the virtual target location or the identification number for the preset camera position. A detailed method of recognizing the location of the talker will be described again below.

However, the recognition of the target location by the target recognition unit 119 refers to selection among the "virtual target locations" for the logical terminal registered at step S301. Therefore, in the example in FIG. 4, recognition of the talker for the first logical terminal 130 is the same as selecting one of the virtual target locations P1, P2, P3, and P4.

Further, according to the control command, controlling the camera placed in another videoconferencing point is included. The control command in this case is also related to the talker location. But the talker may not be currently speaking.

<Controlling the camera to capture the target: S603>

As described above with step S301, the preset registered in the server 110 is mapped to a particular camera and the virtual target location, and the camera is mapped to a particular physical terminal.

The camera tracking unit 121 selects, among the cameras registered in the logical terminal, a "tracking camera" for capturing the target location recognized at step S601 or the target location according to the control command, and controls the tracking camera to capture the target. When the event occurs at step S601, the camera tracking unit 121 identifies, from the registration information of the logical terminal, the physical terminal connected to the event and the preset identification number.

For example, when the event at step S601 is the target recognition according to the talker recognition, the camera tracking unit 121 identifies the physical terminal connected to the recognized talker location (the same as the virtual target location), and the preset identification number. When it is recognized that the talker is located at the P2, the camera tracking unit 121 provides the first physical terminal 11 with the preset identification number PS2 to control the first physical terminal 11 in such a manner as to capture the P2 location. The first camera 11-3 changes the position according to a panning angle/tilting angle set as the preset identification number PS2 and a zoom parameter, and captures the P2 location.

For example, when the event at step S601 is an event according to the camera-control command from another videoconferencing point, the camera tracking unit 121 identifies the physical terminal connected to the location (the same as the virtual target location) received by the control command, and the preset identification number.

Using the above-described method, the logical terminal of the present invention performs camera tracking.

**Automatic recognition of target location**

The recognition of the location of the target at step S601 for camera tracking control may be performed using various methods.

<A method using the source audio>

The target recognition unit 119 recognizes, on the basis of the information registered for the logical terminal at step S301, a talker's location using the source audio signal received at step S311, and recognizes the talker's location as the target location. When a particular talker located nearby the logical terminal speaks, the speech is input through most of the microphones registered in the logical terminal. For example, no matter where the talker speaks at P1 to P4 in FIG. 4, the speech is input to the first microphone 11-1 and the second microphone 13-1. However, the strengths of the audio signals input to the microphones vary according to the talker's location.

For example, assuming that A1 denotes the average strength of the source audio signals input to the first microphone and A2 denotes the average strength of the source audio signals input to the second microphone, speaking at P1 results A1 >> A2, and speaking at P2 results A1 > A2. Compared to speaking at P2, when speaking at P1, the signal input for A2 is weak. Similarly, speaking at P3 results A1 < A2, and speaking at P4 results A1 << A2. Using the above-described method, the source audio signals are analyzed, and the target recognition unit 119 may determine the talker's location.

Herein, it is assumed that with respect to the source audio signals input to the first microphone and the source audio signals input to the second microphone, only the talker's audio is input. In practice, noises are removed through echo cancellation, or the like.

<A method using the source video>

The target recognition unit 119 may determine the talker in a manner that recognizes the mouth of the person who is speaking through video processing on all source videos provided from the logical terminal. Naturally, the target recognition unit 119 may recognize the talker's location also with the method using the source audio signal. This method also corresponds to a method of recognizing the talker location as the target location.

**A method of recognizing the target location by the control command**

The recognition of the target at step S601 may use the control command that the videoconferencing terminal provides. The control command is provided from each logical or physical terminal side. The control command may be provided in various ways as described below. However, in the present invention, the control command is the pre-determined virtual target location or the identification number for the preset camera position. Therefore, the protocol for transmission of the control command between the server 110 and the physical terminal of the present invention is set, and the pre-determined virtual target location or the identification number for the preset camera position is included in the control command, whereby the videoconferencing point can designate the location of the target. The target recognition unit 119 may immediately recognize the location of the target by receiving the control command.

<Use of a DTMF signal>

As another method, a DTMF signal transmission technique that the conventional videoconferencing terminal has may be used. A common videoconferencing terminal has a function of transmitting a DTMF signal to a remote control and also transmitting the DTMF signal to the videoconferencing server. Further, in the case of a conventional video telephone, like a general telephone, a dial pad capable of generating the DTMF signal is attached on the terminal body, and the DTMF signal may be transmitted to the videoconferencing server. Accordingly, the physical terminal may transmit, to the server 110, the control command including the identification number for the preset camera position over the DTMF signal.

**<Use of an application on a user mobile terminal>**

As another method, the target recognition unit 119 may receive the control command through the application on the mobile terminal that the user possesses. The application may receive the pre-determined virtual target location or the identification number for the preset camera position, and may present a graphic interface for that input. Herein, examples of the mobile terminal include a smart phone, a tablet PC, or the like.

<Use of an FECC control function>

As still another example, the control command may be generated by a PTZ control function of the remote control of the conventional videoconferencing terminal and standard or non-standard FECC(Far End Camera Control). Accordingly, at the physical terminal side, the pre-determined virtual target location or the identification number for the preset camera position may be set in the remote control, and according to the standard or non-standard FECC protocol, the control command may be generated and transmitted to the server 110.

<Use of a microphone button>

The microphone that the logical terminal has is provided with the microphone button attached, and the physical terminals constituting the logical terminal may provide, over the control command to the server 110, the fact that whether the microphone button is operated. The target recognition unit 119 identifies, on the basis of the control command provided from the logical terminal side, which microphone button of the microphones included in the logical terminal is operated, thereby identifying that which of the registered "virtual target locations" is the target location.

<Remote camera tracking control for another videoconferencing point by the control command>

In the meantime, by using the control command, camera tracking control for another videoconferencing point may be performed. The above-described DTMF control signal generated by the physical terminal or the control signal according to the FECC may be the "virtual target location" or the "identification number for the preset camera position" registered in another videoconferencing point. In this case, for camera tracking control of another videoconferencing point, the control command provided to the server 110 needs to include the identification number for designating the videoconferencing point that is the control target. Herein, the identification number may be an identification number that is assigned on a per-logical terminal basis, or may be a telephone number of the representative terminal registered in the logical terminal.

At step S601, when the identification number of the terminal which is included in the control command provided from the videoconferencing point side designates another videoconferencing point, the target recognition unit 119 identifies the registration information of the videoconferencing point (the logical terminal or the physical terminal) and identifies the "virtual target location" or the "identification number for the preset camera position" designated by the control command. At step S603, the camera tracking unit 121 identifies the physical terminal connected to the "identification number for the preset camera position" and identifies the preset identification number, and then provides the physical terminal of the videoconferencing point with the preset identification number such that remote camera control is performed.

**Construction of a video using the target physical terminal**

When the target location is recognized at step S601, the video processing unit 115 may construct a video layout on the basis of the video captured by the tracking camera while performing step S313.

As described above, the video processing unit 115 performs mixing on the source video according to a layout pre-determined for each logical terminal or physical terminal or according to a layout requested by each terminal. The video processing unit 115 may divide the video to be provided to each videoconferencing point into multiple video cells (regions) for display.

In the case where the video to be provided to the videoconferencing point contains a video cell set for the "target", when a camera tracking control event is created at step S601, the video processing unit 115 displays the video (specifically, a talker video) captured by the tracking camera on the video cell set for the "target". For example, the video provided from the physical terminal of which the source audio signal has the greatest strength may be displayed on the video cell set for the target. Alternatively, all source videos provided from the logical terminal of which the audio signal has the highest strength among all the videoconferencing points may be processed as the talker videos for display.

When still another talker is to be displayed on still another video cell, all videos of the physical terminal of which the speech level is secondarily high or of the corresponding logical terminal are displayed.

Further, in terms of the fact that the talker is recognized and captured in association with the video layout, the camera does not necessarily have to be the PTZ camera, and any fixed camera that is fixed to capture the talker at a particular location is possibly used. Therefore, even when the logical terminal of the present invention has as many fixed cameras as the number of the physical terminals, the talker is recognized in a manner that compares the strengths of the source audio signals. According to the result of the recognition, the video layout may be placed on the basis of the video of the talker.

**Provision of the videoconferencing service for the logical terminal (audio processing)**

Since the videoconferencing system 100 of the present invention provides a feature which is the logical terminal, unlike the conventional videoconferencing system or device, the audio signal processing in the server 110 is different from the conventional method.

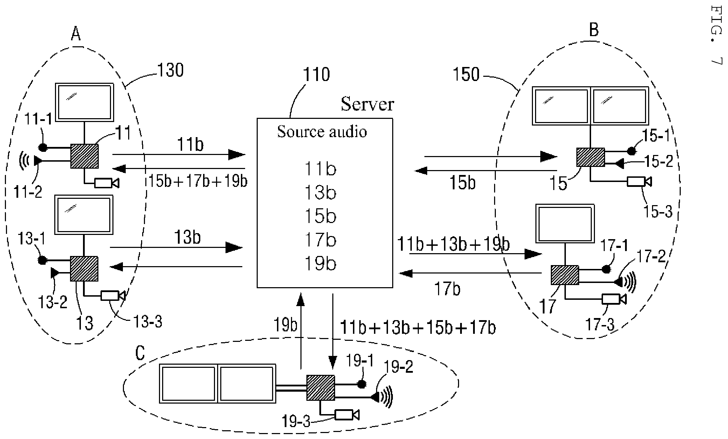

The audio processing unit 117 of the server 110 decodes the audio signal from the RTP packet that is received by the teleconversation connection unit 113 from each point participating in the videoconferencing. The videoconferencing system 100 in FIG. 7 shows the videoconferencing system 100 in FIG. 1 in terms of audio signal processing. As described above, the videoconferencing terminals 11, 13, 15, 17, and 19 have the respective video/voice codecs, and have the microphones 11-1, 13-1, 15-1, 17-1, and 19-1 converting the talker's voices into audio signals and the speakers 11-2, 13-2, 15-2, 17-2, and 19-2 for audio output, respectively.

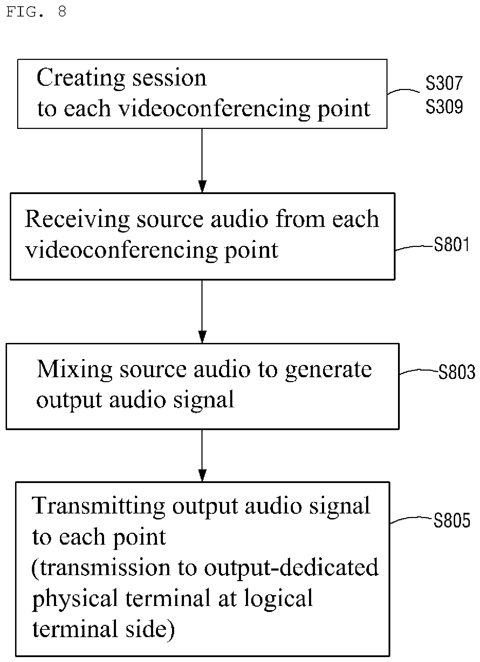

As described above, the videoconferencing terminals 11, 13, 15, 17, and 19 have the SIP sessions individually created to the server 110 and each are the terminals for videoconferencing. Therefore, unless otherwise set, all the physical terminals participating in the videoconferencing configured by the server 110 may transmit the audio signals to the server 110 through the SIP sessions regardless of the configuration of the logical terminal. Hereinafter, the audio signal processing by the audio processing unit 117 will be described with reference to FIG. 8. The method in FIG. 8 proceeds after the SIP sessions are created through steps S307 and S309.

<A source audio receiving step: S801>

Referring to FIG. 7, all the physical terminals 11, 13, 15, 17, and 19 participating in the videoconferencing have the SIP sessions individually created to the server 110, and convert the voice or audio that is input to the respective microphones 11-1, 13-1, 15-1, 17-1, and 19-1 into audio signals for provision in the form of RTP packets to the server 110. Thus, the teleconversation connection unit 113 of the server 110 receives all the RTP packets provided by all the physical terminals 11, 13, 15, 17, and 19 participating in the videoconferencing. This step corresponds to step S311 related to the reception of the source videos.

<A source audio processing step: S803>

The audio processing unit 117 decodes the RTP packets received through the SIP sessions to obtain the audio signals (hereinafter, referred to as "source audio signals") provided from all the physical terminals 11, 13, 15, 17, and 19 participating in the videoconferencing, and mixes the signals into an audio signal (hereinafter, referred to as an "output audio signal") to be provided to each videoconferencing point. This corresponds to step S313.

The output audio signal to be provided to each videoconferencing point is obtained by mixing audio signals provided from different videoconferencing points. Herein, various methods are possible.

(Method 1) First, regardless of whether each videoconferencing point is the physical terminal or the logical terminal, all audio signals provided from the corresponding videoconferencing point may be mixed. For example, in the output audio signal to be transmitted to the first logical terminal 130, the source audio signals provided by the second logical terminal 150 and the fifth physical terminal 19 need to be mixed, so the audio processing unit 117 mixes the source audio signals provided by the third physical terminal 15, the fourth physical terminal 17, and the fifth physical terminal 19. In the audio signal to be transmitted to the second logical terminal 150, the source audio signals provided by the first logical terminal 130 and the fifth physical terminal 19 need to be mixed, so the audio processing unit 117 mixes the source audio signals provided by the first physical terminal 11, the second physical terminal 13, and the fifth physical terminal 19. In the audio signal to be transmitted to the fifth physical terminal 19, the source audio signals provided by the first logical terminal 130 and the second logical terminal 150 need to be mixed, so the audio processing unit 117 mixes the source audio signals provided by the first physical terminal 11, the second physical terminal 13, the third physical terminal 15, and the fourth physical terminal 17.

(Method 2) When another videoconferencing point is the logical terminal, only the audio signal provided by one physical terminal selected among the physical terminals belonging to the logical terminal is subjected to mixing for the output audio signal. For example, in the output audio signal to be transmitted to the first logical terminal 130, the source audio signals provided by the second logical terminal 150 and the fifth physical terminal 19 need to be mixed. Since the second logical terminal 150 includes the third physical terminal 15 and the fourth physical terminal 17, the audio processing unit 117 mixes only the source audio signal provided by one terminal selected among the third physical terminal 15 and the fourth physical terminal 17 with the source audio signal provided by the fifth physical terminal 19. Herein, the source audio signal selected for mixing is not necessarily the source audio signal provided by the output-dedicated physical terminal.

There are various reasons for adopting this method. For example, in the specific application step of this method, the audio signal received through the microphone closest to the talker's location at the second logical terminal 150 side may be selected for mixing, and the audio signal provided by the other physical terminal of the second logical terminal 150 may not be mixed. This solves the problem that due to the slight time difference occurring when the talker's speech is input to all the microphones 15-1 and 17-1 of the second logical terminal 150, the audio or voice is not clearly heard.

<Transmission of the output audio signal: S805>

The audio processing unit 117 compresses the "output audio signal" obtained by mixing for provision to each videoconferencing point in a pre-determined audio signal format and encodes the result into the RTP packet for transmission to each videoconferencing point. However, at the logical terminal side, the "output audio signal"

is transmitted to the output-dedicated physical terminal described below.

## The output-dedicated physical terminal

Regardless of the logical terminal settings, the server 110 establishes the SIP sessions to all the physical terminals participating in the videoconferencing, and the audio signals are transmitted through the SIP sessions. Herein, when the videoconferencing point is the logical terminal like the first point A and the second point B, the audio processing unit 117 transmits the newly encoded audio signal only to the output-dedicated physical terminal. When the videoconferencing point is not the logical terminal but the physical terminal like the third point C, the audio processing unit 117 transmits the newly encoded audio signal to the physical terminal as in the related art. To this end, at the process of registering the logical terminal, the terminal registration unit 111 of the server 110 receives and registers one of the physical terminals constituting the logical terminal as the "output-dedicated physical terminal". The "output-dedicated physical terminal" may be the "representative terminal" of the logical terminal described above, or may be determined as a terminal different from the representative terminal.

When the logical terminal participates in the videoconferencing, the audio signals provided by another videoconferencing point are not output through all the physical terminals constituting the logical terminal, but output only through the output-dedicated physical terminal. Otherwise, the same audio signals are output through the multiple speakers with slight time differences and thus clear audio is not output. In addition, when the output-dedicated physical terminal is not determined, a number of complex cases regarding echo cancellation occur, which is inappropriate.

Therefore, all the physical terminals constituting the logical terminal convert the talker's voice, or the like into the audio signals and are capable of providing the results to the server 110, but the audio signal provided by the server 110 is provided only to the output-dedicated physical terminal.

Referring to FIG. 7, it is assumed that in the first logical terminal 130 of the first point A, the first physical terminal 11 is registered as the output-dedicated physical terminal, and that in the second logical terminal 150 of the second point B, the fourth physical terminal 17 is registered as the output-dedicated physical terminal.

The audio processing unit 117 provides the output audio signal (15b+17b+19b) to be provided to the first point A only to the first physical terminal 11 that is the output-dedicated physical terminal, and provides the output audio signal (11b+13b+19b) to be provided to the second point B only to the fourth physical terminal 17. Since the third point C is the physical terminal, the audio processing unit 117 transmits the output audio signal (11b+13b+15b+17b) to be provided to the third point C to the fifth physical terminal 19.

Among the physical terminals constituting the logical terminal, to the terminal other than the output-dedicated physical terminal, the RTP packet having no audio signal may be transmitted. Herein, "no audio signal" refers to, for example, an audio signal having no amplitude. According to an embodiment, the RTP packet itself for the audio signal may not be transmitted.

Therefore, in the first point A that is the logical terminal, the first physical terminal 11 outputs the output audio signal (15b+17b+19b) through its speaker 11-2, and does not output any audio through the speaker 13-2 of the second physical terminal 13. Similarly, in the second point B that is the logical terminal, the fourth physical terminal 17 outputs the output audio signal (11b+13b+19b) through its speaker 17-2, and does not output any audio through the speaker 15-2 of the third physical terminal 15.

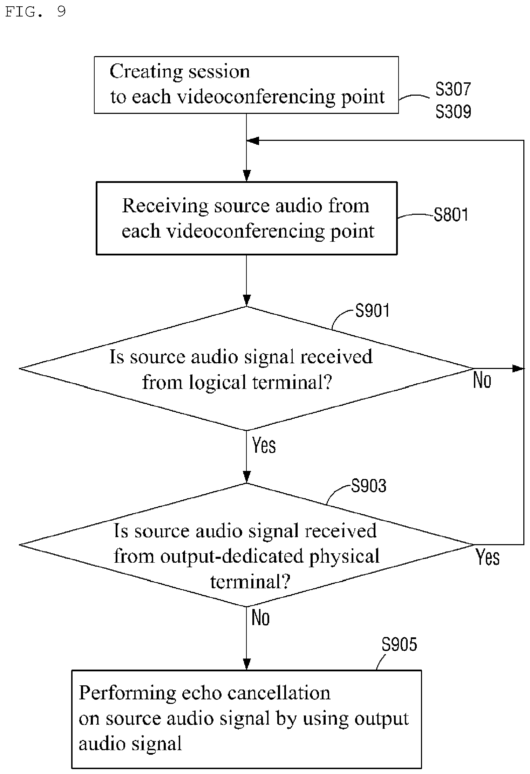

## Paring echo cancelling in the logical terminal (FIG. 9)

As described above, since all the physical terminals participating in the videoconferencing configured by the server 110 each are the videoconferencing terminals regardless of the configuration of the logical terminal, the source audio signals being input to their microphones are not output their speakers.

Also, the physical terminal participating in the videoconferencing configured by the server 110 may have an echo cancellation function regardless of the configuration of the logical terminal. However, in order to remove the echo from the input source audio signal, an audio signal (output audio signal) for comparative reference is required. The output audio signal to be transmitted to the logical terminal is transmitted only to the output-dedicated physical terminal. Therefore, the videoconferencing terminal that belongs to the logical terminal but is not the output-dedicated physical terminal does not have the reference audio signal for performing the echo cancellation function.

In the example in FIG. 7, since in the first logical terminal 130, the first physical terminal 11 is set as the output-dedicated physical terminal, the audio processing unit 117 transmits the output audio signal for the first logical terminal 130 only to the first physical terminal 11 but not to the second physical terminal 13. Describing for understanding, this does not mean that the audio processing unit 117 does not transmit any RTP packet to the second physical terminal 13. Only the audio signal provided to the first physical terminal 11 for output is not provided to the second physical terminal 13.

Conversely, at the first logical terminal 130 side, the first physical terminal 11 and the second physical terminal 13 transmit, to the server 110, the source audio signals 11b and 13b received through their microphones 11-1 and 13-1, respectively. Herein, the first physical terminal 11 that is the output-dedicated physical terminal receives, from the server 110, the audio signal for output, and is thus capable of performing echo cancellation on the signal input through the microphone 11-1. However, the second physical terminal 13 is not the output-dedicated physical terminal and thus does not receive the output audio signal from the server 110 and does not have the reference signal for the echo cancellation.

Therefore, the second physical terminal 13 is not capable of performing echo cancellation on the source audio signal input through the microphone 13-1. Accordingly, the echo processing unit 123 of the videoconferencing server 110 of the present invention performs the echo cancellation function.

The echo processing unit 123 performs the echo cancellation function before mixing for the output audio signal to be provided to each videoconferencing point, and may perform basic noise cancellation when necessary. The echo cancellation of the present invention is completely different from the echo cancellation in the conventional general videoconferencing system or equipment. Hereinafter, the echo cancellation function which is the feature of the present invention is referred to as "paring echo cancelling".

When the source audio received from the logical terminal side is not provided by the output-dedicated physical terminal, the echo processing unit 123 uses the output audio signal transmitted to the logical terminal to remove the echo. Hereinafter, the echo cancellation method of the videoconferencing server 110 will be described with reference to FIG. 9. The method in FIG. 9 is performed after the SIP session is created between the server 110 and each physical terminal according to steps S307 and S309 in FIG. 3.

First, at step S801, when the audio processing unit 117 receives the source audio signal from each of the physical terminals 11, 13, 15, 17, and 19 participating in the videoconferencing, the echo processing unit 123 determines whether the source audio signal is the signal that is provided by the terminal other than the output-dedicated physical terminal as the physical terminal belonging to the logical terminal, at steps S901 and S903.

As the result of the determination at steps S901 and S903, when the source audio signal is the signal that is provided by the terminal other than the output-dedicated physical terminal as the physical terminal belonging to the logical terminal, the echo processing unit 123 performs the echo cancellation function on the basis of the output audio signal transmitted to the logical terminal. An echo cancellation algorithm of the echo processing unit 123 is an algorithm where waveform which is the same as that of the output audio signal is removed from the input audio signal, and a commonly known echo cancellation algorithm may be used. In the example in FIG. 7, the echo processing unit 123 compares the source audio signal provided by the second physical terminal 13 with the output audio signal transmitted to the first physical terminal 11 that is the output-dedicated physical terminal, and removes the echo. When the source audio signal provided by the second physical terminal 13 has an echo, the source audio signal has the same waveform as the output audio signal transmitted to the first physical terminal 11. Therefore, the echo is removed by the echo cancellation algorithm at step S905.

As the result of the determination at steps S901 and S903, when the audio signal is not transmitted from the logical terminal or is the signal provided by the output-dedicated physical terminal as the physical terminal belonging to the logical terminal, the echo processing unit 123 does not need to perform the echo cancellation function. This is because the output-dedicated physical terminal has its own echo cancellation function and removes the echo. As another method, as in step S603, by being compared with the output audio signal that has already been transmitted to the first physical terminal 11, the echo may be removed.

Using the above-described method, the paring echo cancelling of the present invention is performed.

**(Embodiment) Another method for audio processing and echo cancellation in the logical terminal**

In the example described above, the audio processing unit 117 provides the output audio signal only to the output-dedicated physical terminal, but no limitation thereto is imposed. For example, the same output audio signals may be provided to all the physical terminals constituting the logical terminal. However, only the output-dedicated physical terminal outputs the output audio signal, and the remaining physical terminal simply uses the output audio signal as a reference audio signal for echo cancellation.

The audio processing unit 117 transmits the same output audio signals to all the physical terminals constituting the logical terminal, but the audio signal in the RTP packet provided to the output-dedicated physical terminal is marked as "for output", and the audio signal in the RTP packet provided to the remaining physical terminal is marked as "for echo cancellation". In this case, echo cancellation is performed in each physical terminal, and thus the server 110 does not need to have the echo processing unit 123.

For example, in the example in FIG. 7, in the case where the audio processing unit 117 has the output audio signal to be provided to the first logical terminal 130, the output audio signal is transmitted to the first physical terminal 11 that is the output-dedicated physical terminal, being marked as "for output". The output audio signal is transmitted to the second physical terminal 13, being marked as "for echo cancellation".

Accordingly, the first physical terminal 11 outputs the output audio signal through the speaker 11-2. The second physical terminal 13 retains the output audio signal provided from the server 110 without outputting the same through the speaker 13-2, and uses the same for removing the echo from the audio signal received through the microphone 13-1.

Although the exemplary embodiments of the present invention have been illustrated and described above, the present invention is not limited to the aforesaid particular embodiments, and can be variously modified by those skilled in the art without departing the gist of the present invention defined in the claims. The modifications should not be understood individually from the technical idea or perspective of the present invention.

## Claims

1. A videoconferencing service provision method of a videoconferencing server, the method comprising:

   a registration step where multiple physical terminals are registered as a first logical terminal so that the multiple physical terminals operate as one videoconferencing point, and an arrangement between multiple microphones connected to the multiple physical terminals is registered in registration information of the first logical terminal;
   a call connection step where videoconferencing between multiple videoconferencing points is connected, and with respect to the first logical terminal, individual connection to the multiple physical terminals constituting the first logical terminal is provided;
   a source reception step where source videos and source audio signals provided by the multiple videoconferencing points are received, and with respect to the first logical terminal, the source video and the source audio signal are received from each of the multiple physical terminals;
   a target recognition step where on the basis of the arrangement between the multiple microphones, one selected among the source videos, the source audio signals, and control commands provided by the multiple physical terminals is used to recognize a location of a target subjected to tracking control in the first logical terminal; and
   a camera tracking step where on the basis of the target location, one of cameras connected to the multiple physical terminals is selected as a tracking camera, and the tracking camera is controlled to capture the target,
   whereby the first logical terminal operates as one virtual videoconferencing point.

2. The method of claim 1, wherein when the physical terminals included in the first logical terminal preset multiple camera position,
   at the camera tracking step, an identification number of the camera position corresponding to the location of the target recognized at the target recognition step is provided to the physical terminal to which the tracking camera is connected among the multiple physical terminals so that the tracking camera is controlled to change the position and to track the target.

3. The method of claim 2, wherein in the registration information of the first logical terminal, arrangements among pre-determined virtual target locations, the multiple microphones connected to the multiple physical terminals, and the identification numbers of the camera positions are registered, and
   at the camera tracking step, the virtual target location corresponding to the target location recognized at the target recognition step is identified, and the tracking camera and the identification number of the camera position are extracted from the registration information.

4. The method of claim 3, wherein the registration step includes, displaying, to a user, a screen for schematically receiving the arrangements among the pre-determined virtual target locations, the multiple microphones connected to the multiple physical terminals, and the identification numbers of the camera positions.

5. The method of claim 2, further comprising:

   a multiscreen video provision step where among all the source videos received at the source reception step, the videos provided by the other videoconferencing points are distributed to the multiple physical terminals of the first logical terminal;
   an audio processing step where from an entire source audio received at the source audio reception step, the audio signals provided by the other videoconferencing points are mixed into an output audio signal to be provided to the first logical terminal; and
   an audio output step where the output audio signal is transmitted to an output-dedicated physical terminal among the multiple physical terminals belonging to the first logical terminal.

6. The method of claim 5, wherein at the multiscreen video provision step, the source video received from each of the multiple physical terminals of the first logical terminal is placed in the videos to be provided to the other videoconferencing points, and the source video provided from the physical terminal corresponding to the target location among the multiple physical terminals is placed in a region set for the target.

7. The method of claim 5, wherein at the multiscreen video provision step, all the source videos provided from the logical terminal corresponding to the location of the target among the multiple videoconferencing points are placed in a region set for the target.

8. The method of any one of claims 2 to 7, wherein the control command is one of the identification numbers of the camera positions, and is provided from the multiple physical terminals constituting the first logical terminal, from a user mobile terminal, or from the other videoconferencing points.

9. The method of any one of claims 1 to 7, wherein at the target recognition step, on the basis of the arrangement between the multiple microphones and strengths of the source audio signals provided by the multiple physical terminals, the location of the target in the first logical terminal is recognized.

10. The method of any one of claims 1 to 7, wherein at the target recognition step, the location of the target in the first logical terminal is recognized in a manner that recognizes a mouth of a person who is speaking through video processing on the source video.

11. The method of claim 1, wherein the call connection step includes:

   receiving a call connection request message from a calling party point;
   inquiring, while connecting a calling party and a called party in response to the receiving of the call connection request message, whether the calling party or the called party is the first logical terminal;
   creating, when the calling party is the physical terminal of the first logical terminal as a result of the inquiring, individual connection to the other physical terminals of the first logical terminal; and
   creating, when the called party requested for call connection is a physical terminal of a second logical terminal as a result of the inquiring, individual connection to the other physical terminals of the second logical terminal.

12. A videoconferencing server providing a videoconferencing service, the server comprising:

   a terminal registration unit registering multiple physical terminals as a first logical terminal so that the multiple physical terminals operate as one videoconferencing point, and registering an arrangement between multiple microphones connected to the multiple physical terminals;
   a teleconversation connection unit configured to, connect videoconferencing between multiples videoconferencing points including the first logical terminal, provide individual connection to the multiple physical terminals constituting the first logical terminal with respect to the first logical terminal, receive source videos and source audio signals from the multiple videoconferencing points, and receive the source video and the source audio signal from each of the multiple physical terminals with respect to the first logical terminal;
   a target recognition unit using, on the basis of the arrangement between the multiple microphones, one selected among the source videos, the source audio signals, and control commands provided by the multiple physical terminals to recognize a location of a target subjected to tracking control in the first logical terminal; and
   a camera tracking unit selecting, on the basis of the target location, one of cameras connected to the multiple physical terminals as a tracking camera, and controlling the tracking camera to capture the target,
   whereby the first logical terminal operates as one virtual videoconferencing point.

13. The server of claim 12, wherein when the physical terminals included in the first logical terminal preset multiple camera positions,
   the camera tracking unit provides an identification number of the camera position corresponding to the location of the target recognized at the target recognition step to the physical terminal to which the tracking camera is connected among the multiple physical terminals, thereby controlling the tracking camera to change the position and to track the target.

14. The server of claim 13, wherein in registration information of the first logical terminal, arrangements among pre-determined virtual target locations, the multiple microphones connected to the multiple physical terminals, and the identification numbers of the camera positions are registered, and
   the camera tracking unit identifies the virtual target location corresponding to the target location to extract, from the registration information, the tracking camera and the identification number of the camera position.

15. The server of claim 14, wherein the terminal registration unit displays, to a user, a screen for schematically receiving the arrangements among the pre-determined virtual target locations, the multiple microphones connected to the multiple physical terminals, and the identification numbers of the camera positions.

16. The system of claim 12, further comprising:

   a video processing unit distributing the videos provided by the other videoconferencing points among all the source videos received by the teleconversation connection unit to the multiple physical terminals of the first logical terminal; and

an audio processing unit mixing the audio provided by the other videoconferencing points from an entire source audio received by the teleconversation connection unit into an output audio signal to be provided to the first logical terminal, and transmitting the output audio signal to an output-dedicated physical terminal among the multiple physical terminals belonging to the first logical terminal.

17. The server of claim 16, wherein the video processing unit places the source video received from each of the multiple physical terminals of the first logical terminal in the videos to be provided to the other videoconferencing points, and places the source video provided from the physical terminal corresponding to the target location among the multiple physical terminals in a region set for the target.

18. The server of claim 16, wherein the video processing unit places all the source videos provided from the logical terminal corresponding to the location of the target among the multiple videoconferencing points in a region set for the target.

19. The server of any one of claims 13 to 18, wherein the control command is one of the identification numbers of the camera positions, and is provided from the multiple physical terminals constituting the first logical terminal, from a user mobile terminal, or from the other videoconferencing points.

20. The server of any one of claims 12 to 18, wherein the target recognition unit recognizes, on the basis of the arrangement between the multiple microphones and strengths of the source audio signals provided by the multiple physical terminals, the location of the target in the first logical terminal.

21. The server of any one of claims 12 to 18, wherein the target recognition unit recognizes the location of the target in the first logical terminal in a manner that recognizes a mouth of a person who is speaking through video processing on the source video.

22. The server of claim 12, wherein the teleconversation connection unit is configured to,
inquire, while connecting a calling party and a called party in response to a call connection request message from a calling party point, whether the calling party or the called party is the first logical terminal,
create, when the calling party is the physical terminal of the first logical terminal as a result of the inquiring, individual connection to the other physical terminals of the first logical terminal, and create, when the called party requested for call connection is a physical terminal of a second logical terminal as the result of the inquiring, individual connection to the other physical terminals of the second logical terminal.

FIG. 1

FIG. 2

FIG. 3

Calling party | Server 110 | Called party

Register

INVITE

S301 Registering physical terminal and logical terminal

S303

S305 Inquiring whether called party or calling party is logical terminal

Register

S307 Calling all terminals of logical terminal to which receiver belongs/ creating sessions

S309 When caller is component of logical terminal, session to remaining terminal is created

Source video 11a, 13a

Source video 15a, 17a, 19a

S311 Receiving source video from each physical terminal

S313 Reprocessing source video

S315 Providing video reprocessed for each physical terminal to each physical terminal

FIG. 4

FIG. 5

FIG. 6

Creating session
to each videoconferencing point    S307
S309

Receiving source video/audio
from each videoconferencing point    S311

Recognizing target location    S601

Selecting tracking camera and
controlling tracking camera with
preset camera positions to
capture target location    S603

FIG. 7

FIG. 8

Creating session
to each videoconferencing point — S307
S309

Receiving source audio from each
videoconferencing point —S801

Mixing source audio to generate
output audio signal —S803

Transmitting output audio signal
to each point
(transmission to output-dedicated
physical terminal at logical
terminal side) —S805

FIG. 9

```
                    ┌─────────────────────────────┐
                    │      Creating session       │        S307
                    │ to each videoconferencing point │    S309
                    └─────────────────────────────┘
                                  │
                                  │◄──────────────────────────┐
                                  ▼                           │
                    ┌─────────────────────────────┐           │
                    │    Receiving source audio from │  S801   │
                    │    each videoconferencing point │        │
                    └─────────────────────────────┘           │
                                  │                            │
                                  ▼                            │
                           S901                                │
                        ◇─────────────◇                        │
                 ◇                         ◇                   │
            ◇    Is source audio signal received   ◇   No      │
                 ◇     from logical terminal?    ◇─────────────┤
                        ◇─────────────◇                        │
                              │ Yes                            │
                              ▼                                │
                           S903                                │
                        ◇─────────────◇                        │
                 ◇                         ◇                   │
            ◇    Is source audio signal received   ◇   Yes     │
                 ◇   from output-dedicated physical ◇──────────┘
                 ◇          terminal?          ◇
                        ◇─────────────◇
                              │ No
                              ▼         S905
                    ┌─────────────────────────────┐
                    │  Performing echo cancellation │
                    │ on source audio signal by using output │
                    │  audio signal                │
                    └─────────────────────────────┘
```

## INTERNATIONAL SEARCH REPORT

| International application No. |
| --- |
| **PCT/KR2019/001905** |

### A. CLASSIFICATION OF SUBJECT MATTER

*H04N 7/15(2006.01)i, H04N 7/14(2006.01)i, G06T 7/70(2017.01)i*

According to International Patent Classification (IPC) or to both national classification and IPC

### B. FIELDS SEARCHED

Minimum documentation searched (classification system followed by classification symbols)
H04N 7/15; G06T 1/00; H04L 12/18; H04N 5/232; H04W 4/08; H04W 4/20; H04N 7/14; G06T 7/70

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: video conferencing, point, logical terminal, registration, call connection, source reception, target recognition, camera tracking

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2007-0054769 A (SAMSUNG ELECTRONICS CO., LTD.) 30 May 2007 See paragraphs [0029]-[0033], [0052]; and figures 1, 3, 5. | 1,9-10,12,20-21 |
| A | | 2-8,11,13-19,22 |
| Y | KR 10-2000-0037652 A (DAEWOO ELECTRONICS CO., LTD.) 05 July 2000 See claim 1; and figures 5-6. | 1,9-10,12,20-21 |
| Y | JP 2003-189273 A (SHARP CORP.) 04 July 2003 See paragraphs [0073]-[0075]; and figure 3. | 10,21 |
| A | KR 10-2014-0098573 A (ELECTRONICS AND TELECOMMUNICATIONS RESEARCH INSTITUTE) 08 August 2014 See paragraphs [0026]-[0027]. | 1-22 |
| A | KR 10-2014-0003150 A (TI SQUARE TECHNOLOGY LIMITED) 09 January 2014 See paragraph [0045]. | 1-22 |

☐ Further documents are listed in the continuation of Box C.  ☒ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 07 JUNE 2019 (07.06.2019) | **07 JUNE 2019 (07.06.2019)** |

| Name and mailing address of the ISA/KR | Authorized officer |
| --- | --- |
| Korean Intellectual Property Office Government Complex Daejeon Building 4, 189, Cheongsa-ro, Seo-gu, Daejeon, 35208, Republic of Korea Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2019/001905**

| Patent document cited in search report | Publication date | Patent family member | Publication date |
|---|---|---|---|
| KR 10-2007-0054769 A | 30/05/2007 | KR 10-0725780 B1 | 08/06/2007 |
| KR 10-2000-0037652 A | 05/07/2000 | None | |
| JP 2003-189273 A | 04/07/2003 | JP 4212274 B2 | 21/01/2009 |
| KR 10-2014-0098573 A | 08/08/2014 | None | |
| KR 10-2014-0003150 A | 09/01/2014 | KR 10-1393077 B1 | 12/05/2014 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2019001905 W
- KR 1020180058605
- KR 1020160062787 A